# EUROPEAN PATENT SPECIFICATION

(11) **EP 1 860 496 B1**
(45) Date of publication and mention of the grant of the patent: **12.08.2009**
(21) Application number: 07010366.8
(22) Date of filing: 24.05.2007
(51) Int. Cl.: G03B 21/16

(54) **Video projector**
Videoprojektor
Projecteur vidéo

(30) Priority: 25.05.2006 JP 2006145616
(43) Date of publication of application: 28.11.2007
(73) Proprietor: Funai Electric Co., Ltd., Daito-shi, Osaka 574-0031 (JP)
(72) Inventor: Doi, Naohito, Daito-shi Osaka 574-0013 (JP); Ochi, Masaki, Daito-shi Osaka 574-0013 (JP)
(74) Representative: Grünecker, Kinkeldey, Stockmair & Schwanhäusser Anwaltssozietät

(56) References cited:
- EP-A- 1 093 013
- GB-A- 439 428
- US-A1- 2004 109 142
- US-A1- 2004 228 130
- US-A1- 2005 248 727

## Description

The present invention relates to a video projector which projects images on an external screen.

In a video projector, which projects images on a screen disposed in front of the video projector on the basis of image signals outputted from a personal computer, for example, a discharge lamp is conventionally used as a light source. Since the light emitting portion of the light source generates heat following to the light emission, it is cooled by a cooling air generated by a blower fan so as to maintain a proper temperature not to be too high-temperature. In addition, elements such as a color wheel and so on, which are to be heated by the light beam emitted from the light source during the operation of the video projector, are cooled by a cooling air which is taken inside a housing of the video projector by a ventilation fan.

A conventional video projector disclosed in, for example, Japanese Laid-Open Patent Publication No. 2004-212727 guides unnecessary lights to outside a housing of an optical engine so as not to increase the temperature of the housing. Another conventional video projector described in, for example, Japanese Laid-Open Patent Publication 2002-31851 has a ventilation duct formed on a thermal insulation material or a high thermal conductive material to exhaust a cooling air to outside of the video projector.

Generally, in order to cool the elements such as the color wheel surely, it is necessary to increase a quantity of the cooling air which is led to the elements. For increasing the quantity of the cooling air, it is considered to increase a number of the cooling fans, however, it may cause the upsizing and increase of the manufacturing cost of the video projector. Alternatively, for increasing the quantity of the cooling air without increasing the number of the cooling fans, the revolution number per a unit time of the ventilation fan and/or the blower fan must be increased, or the sizes of these fans must be upsized. When the revolution number of the fan is increased, it will cause the increase of the power consumption of the video projector, the increase of the acoustic noises of the video projector due to hissing sound of the fan. The increase of the revolution number of the fan further causes that the temperature of the light source is decreased too much, and thereby, life of the light source is shortened. In contrast, the upsizing of the ventilation fan and/or the blower fan is difficult in a compact video projector. In other words, it is difficult to realize the downsizing and low-noise of the video projector and to cool the elements such as the color wheel properly with keeping the temperature of the light source in a proper level, simultaneously.

In addition, the blower fan for cooling the light source is generally fixed on the housing with screws in the conventional video projector. Therefore, when the blower fan is disposed in the vicinity of the optical engine which is unitized with the color wheel, a DMD (Digital Micro-mirror Device), and so on, an attachment work of the optical engine to the housing with the screws is necessary after attaching the blower fan. Since a lot of screws is necessary to assemble the video projector, the assemble work of the video projector becomes complex, and thus, it causes a drag to reduce the cost of the video projector.

Another conventional video projector described in, for example, Japanese Laid-Open Patent Publication No. 2003-5293 has a plurality of air-paths into which a predetermined quantity of a cooling air generated by a cooling fan is distributed corresponding to temperatures of hot sections, so that an optical system is effectively cooled with a small quantity of the cooling air. The conventional video projector shown in 2003-5293, however, needs the cooling fan for cooling the optical system other than a blower fan for cooling a light source, so that the configuration of the video projector is complicated and a number of elements that constitute the video projector is larger.

EP-A-1093013, according to the preamble of claim 1, discloses a video projector comprising an optical engine forming an image and projecting same on a screen. A discharge lamp emits light and irradiates optical elements of the optical engine. A housing accommodates the optical engine and the discharge lamp. An air blasting fan is disposed below the optical engine and separated from the discharge lamp. The air blasting fan sucks air through a cooling air intake port opened to a lower portion of the housing. The air blasting fan exhausts a part of the cooling air toward a portion of the optical engine and the rest of the cooling air toward the discharge lamp, so that elements of the optical engine and the discharge lamp are cooled by the air blasting fan, simultaneously.

### DISCLOSURE OF THE INVENTION

The present invention is conceived to solve the problems of the conventional video projector described above, and an object of the present invention is to provide a video projector which can maintain a temperature of a light source in a proper level and cool elements used to form an image properly, and can prevent increase of a manufacturing cost thereof.

This object is solved by the video projector having the features defined in claim 1.

According to the configuration of the video projector, elements of the optical engine provided in the first portion are cooled by air flow which is sucked by the blower fan, and elements of the optical engine provided in the second portion are cooled by a part of the cooling air generated by the blower fan, so that all the elements that constitute the optical engine are cooled simultaneously with the light source without increasing the quantity of the cooling air generated by the blower fan. In other words, the cooling capacity of the blower fan is increased little in comparison with the conventional blower fan which is suitable for cooling the light source. Thus, the video projector can maintain the temperature of the light source in a proper level and cool the elements used to form an image properly, and can prevent increase of the manufacturing cost of the video projector. Furthermore, the power consumption of the video projector due to the cooling fans rarely increased.

Furthermore, it is preferable that the blower fan has air suction openings on both of an upper end face and a lower end face respectively facing the optical engine and a bottom of the housing, and the lower end face is departed by a predetermined distance from the bottom of the housing. According to such a configuration, the blower fan can suck the air in the inside of the housing from upper side and lower side thereof, so that the quantity of the cooling air can be maintained in a predetermined level necessary to cool the light source and the color wheel.

Still furthermore, it is preferable that the blower fan has a partition which is formed to take along the air suction opening on the upper end face and protruded upward, contacts a lower end face of the frame or the housing of the optical engine in a vicinity of the through holes. According to such a configuration, the cooling air exhausted from the opening toward the color wheel rarely blows back to the blower fan through a gap between the lower end face of the frame or housing of the optical engine and the upper end face of the blower fan.

Still furthermore, it is preferable that the blower fan is fixed on the housing with the optical engine simultaneously by screws so that the blower fan is stationary held down between the housing and the optical engine. According to such a configuration, it is no need to fix the blower fan on the housing with the screws independently from the optical engine. Consequently, the assemble work of the video projector can be simplified, and the manufacturing cost of the video projector can be reduced.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:
FIG. 1 is a plain sectional view showing a configuration of a video projector in accordance with the present invention;
FIG. 2 is a block diagram showing a circuit configuration of the video projector;
FIG. 3 is a perspective view showing a configuration of an image forming unit of the video projector;
FIG. 4A is an exploded perspective view showing a configuration of a blower fan of the video projector; and
FIG. 4B is a perspective view showing the configuration of the blower fan assembled.

### DETAILED DESCRIPTION OF THE EMBODIMENT

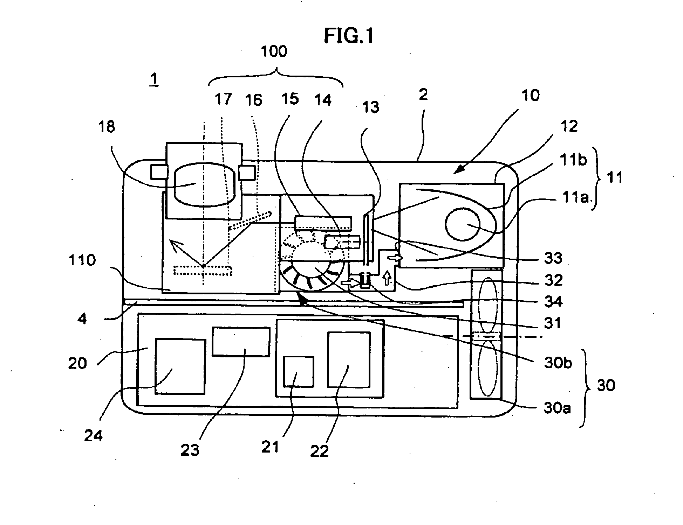

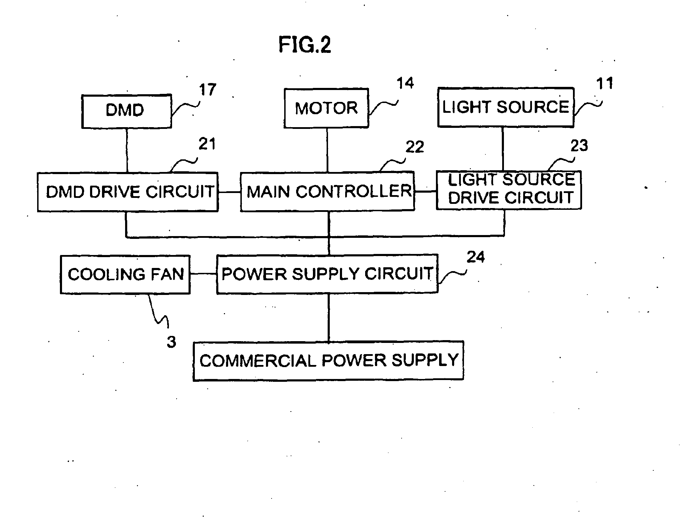

A video projector in accordance with an embodiment of the present invention is described with reference to the drawings. FIG. 1 shows a configuration of a video projector 1 in accordance with the present preferred embodiment. FIG. 2 shows a block configuration of the video projector 1. The video projector 1 is used to project an enlarged image on a screen which is located in front of the video projector 1 by using image signals (image data) outputted from a personal computer, a video camera, or the like. The video projector 1 is schematically comprised of an image forming unit 10 that is disposed at a front portion of a housing 2 and forms an image or images with using the image signals inputted from outward, and a control unit 20 that is disposed at a rear portion of the housing 2, processes the image signals inputted from the outward and controls the image forming unit 10.

As can be seen from FIG. 1, the video projector 1 comprises a light source 11 such as a discharge lamp, for example, a color wheel 13, a motor 14, a mirror 16, a DMD (Digital Micro-mirror Device) 17, a projection lens 18, and so on. The color wheel 13 is located on a light path of the light outputted from the light source 11, and has color filters corresponding to three primary colors at a certain angular pitch, and is rotated at a constant speed. The motor 14 rotates the color wheel 13 at a constant speed. The optical tunnel 15 having a predetermined inside diameter faces with the light source across the color wheel 13. The mirror 16 reflects a light flux, which passes through the optical tunnel, in a certain direction. The DMD (Digital Micro-mirror Device) 17 is located in a light path of the light flux passing through the color wheel 13 and then followed by the optical tunnel 15 and the mirror 16. The DMD 17 is a cluster of micro-mirrors arranged in two-dimensional pattern, and changes an angle of the micro-mirrors according to the image signals inputted from outside, and then reflects the light flux, which passes through the color wheel 13, in a certain direction (a first direction) and a second direction excluding the certain direction. The projection lens 18 projects the light flux reflected by the DMD 17 on a screen. The projection lens 18 is a zoom lens that is configured by a plurality of lens elements locations of which are changeable. In the present preferred embodiment, the color wheel 13, the optical tunnel 15, the mirror 16, and the DMD 17 are mounted on a frame or a housing of an optical engine 100 which is made of a metal material formed by casting, for example, and fixed on the housing 2 by screws.

The light source 11 includes a burner 11a that emits lights in every direction, and a reflector 11b that reflects a light, which is outputted backward among lights outputted from the burner 11a, to a forward direction, and gathers the lights in a predetermined area. As can be seen from FIG. 1, the light source 11 is enclosed by a lamp box 12 which is disposed at a front portion in an inside of the housing 2. so that the light source 11 is configured as an independent light source unit. In FIG. 1, in a left side of the optical tunnel 15, a dark box unit 110 is formed to reduce an impact of a stray light, and an antireflection coating is applied to an inner surface of the dark box unit 110 to absorb a reflected light. In addition, a partition plate 4 is illustrated to divide a side of the optical engine 10 from a side of the control unit 20 in the housing 2. The partition plate 4, however, is not necessary when the video projector 1 is actually manufactured. The partition plate 4 can be substituted for walls of a housing of the light source unit and the dark box unit described above.

The reflector 11b has a spheroidal shape, for example, and the burner 11a is located adjacent to one focal point of the spheroid, and the color wheel 13 is partially adjacent to the other focal point of the spheroid. The reflector 11b is made of a glass, for example, and a mirror finished reflection surface is formed on a side of the reflector 11b facing the burner 11a, and a coating film such as a fluorocarbon polymer is formed on the opposite side of the reflector 11b so as to prevent cracking on the reflector 11b.

The control unit 20 includes a DMD drive circuit (control circuit) 21 which drives the DMD 17 by using the image signals, a main controller (control circuit) 22 which wholly controls the video projector 1, a light source drive circuit (control circuit) 23 which drives the light source 11, a power supply circuit 24 which provides electrical power to various units of the video projector 1 including the DMD drive circuit 21, the main controller 22, and the light source drive circuit 23, and a cooling fan 30 which generates a cooling air to cool at least the light source 11 and the power supply circuit 24.

The DMD drive circuit 21 and the main controller 22 consist of a CPU, a ROM, a RAM, and so on, for example. In addition, a noise removal filter or the like is also mounted, if necessary. The light source drive circuit 23 is an inverter circuit which controls the light source 11 such as a discharge lamp to keep the constant electrical power, and consists of a coil, a diode, an FET, and so on. Since the discharge lamp has a low temperature and a low voltage immediately after turned on, a large current may flow in the lamp if the electrical power is controlled to be constant, and thus a lamp life decreases. In order to avoid this trouble, the light source drive circuit 23 performs a warm-up to limit the current flowing in the lamp for a certain period of time after the lamp is turned on. The power supply circuit 24 is a circuit to generate a DC voltage power supply of 12V or 24V, for example, by using an alternate commercial power supply of 100V or 200V, for example, as an input, and consists of a coil, a diode, an FET, and so on.

In the present embodiment, the video projector 1 has a ventilation fan 30a and a blower fan 30b as a cooling fan (cooling unit) 30. As shown in FIG. 1, the ventilation fan 30a takes an air into the inside of the housing 2 from outside and exhausts hot air caused by an absorption of heat generated in heat sources such as the light source 11, the light source drive circuit 23, the power supply circuit 24, and so on, to the outside of the housing 2. In the configuration shown in FIG. 1, the cooling air generated with the ventilation fan 30a is partially led into the side of the image forming unit 10 and the rest of the cooling air is led into the side of the control unit 20.

The blower fan 30b is located at a predetermined position below the optical engine 100 in the vicinity of the lamp box 12. The blower fan 30b collects air in the housing 2 by a main body 31 of the blower fan 30a and blows the air into the lamp box 12 through a duct 32 which is connected to an exhaust vent 33 of the main body 31. In other words, the light source 11 that the temperature thereof in active state becomes much higher than that of other elements is cooled by a cooling air blown by the blower fan 30b. The cooling air blown into the inside of the lamp box 12 by the blower fan 30b will be exhausted from the lamp box 12 after cooling the light source 11, and the hot air that absorbed heat due to the light source 11 will be further exhausted from the housing 2 by the ventilation fan 30a. In addition, an opening 34, through which a part of an air flow in the duct 32 is exhausted toward the color wheel 13, is formed on the duct 32.

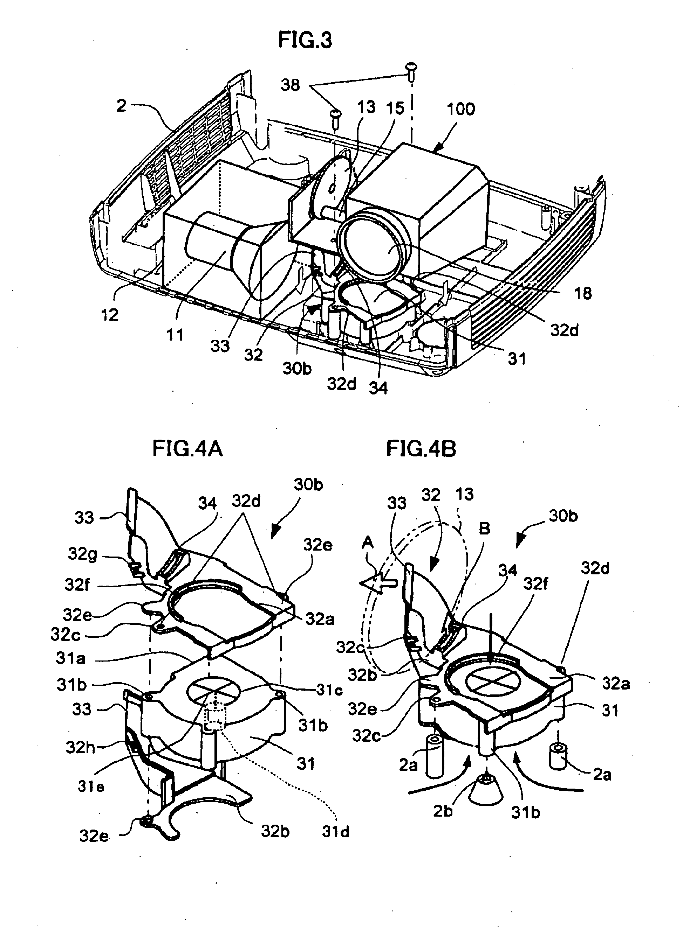

Subsequently, the details of the blower fan 30b are described with reference to FIG. 3 and FIGs. 4A and 4B. FIG. 3 shows a configuration of the image forming unit 10 of the video projector 1. FIGs. 4A and 4B respectively show the configuration of the blower fan 30b.

As can be seen from FIG. 3, the blower fan 30b is disposed substantially in horizontal with respect to the housing 2 at a position below a portion where the color wheel 13 and the optical tunnel 15 of the optical engine 100 are disposed in the lower portion of the housing 2. Hereupon, a plurality of through holes (not shown) is formed on the frame or the housing of the optical engine 100 at the portion where the color wheel 13 and the optical tunnel 15 are disposed, so that the air can flow from upper side to lower side or from lower side to upper side of the optical engine 100.

As shown in FIGs. 4A and 4B, the blower fan 30b is comprised of the main body 31 and the duct 32, as described above. The main body 31 includes a motor 31d and a fan 31e, sucks air from upper side and lower side thereof, and exhausts the air from an exhausting opening 31 c disposed at a side of the main body 31 in the posture when it is mounted on the housing 2. The duct 32 is further comprised of an upper cover member 32a and a lower cover member 32b which respectively cover the upper side and the lower side of the exhausting opening 31c. The capacity of the blower fan 30b, that is, the quantity of the cooling air generated by the blower fan 30b is substantially the same as that of the conventional blower fan which is suitable for cooling the light source 11 without decreasing the temperature of the light source too much.

The upper cover member 32a of the duct 32 is formed to cover the upper end face of the main body 31 except the air suction opening 31e, as shown in FIG. 4. The upper cover member 32a has the opening 34 at a position corresponding to the color wheel 13 which is disposed at a position illustrated by two-dotted chain lines in FIG. 4B, so that the color wheel 13 is cooled by the blower fan 30b. The upper cover member 32a further has two screw holes 32d which are formed at portions 32c protruding outward from the upper end face of the main body 31, and a partition 32f which is formed to take along the air suction opening 31e and protruded upward. On the other hand, the lower cover member 32b is formed to have a shape for covering a portion of the main body 31 in the vicinity of the exhausting opening 31 c, as shown in FIG. 4A. The upper cover member 32a and the lower cover member 32b respectively have engaging protrusions 32g and 32h which are engaged with each other and fitting protrusions 32e which fit into fixing holes 31b of the main body 31.

Hereupon, it is assumed that the main body 31, the upper cover member 31 a and the lower cover member 32b were initially disassembled independently from each other as shown in FIG. 4A. When the lower cover member 32b is attached to the bottom face of the main body 31 and the upper cover member 32a is attached to the top face of the main body 31, the engaging protrusions 32g and 32h of the upper cover member 32a and the lower cover member 32b are engaged with each other, and the fitting protrusions 32e of the upper cover member 32a and the lower cover member 32b are respectively fitted to into the fixing holes 31b of the main body 31, so that the main body 31, the upper cover member 31a and the lower cover member 32b are integrally assembled as the blower fan 30b, as shown in FIG. 4B.

The duct 32 which is configured by the upper cover member 32a and the lower cover member 32b leads the cooling air exhausted from the exhausting opening 31 c of the main body 31 to be further exhausted outward the duct 32 from the exhaust vent 33 and the opening 34 as shown by outline arrows A and B in FIG. 4B. Since the exhaust vent 33 is communicated to a front face of the lamp box 12 into which the light source 11 is contained, the light source 11 is cooled by the cooling air which is generated by the blower fan 30b and blown into the inside of the lamp box 12.

The blower fan 30b is mounted on two posts 2a and a positioning protrusion 2b which are formed to protrude upward on a bottom of the housing 2 in a manner so that the screw holes 32d of the upper cover member 32a face screw holes formed on the posts 2a directly or through the fixing holes 31b of the main body 31, and one of the fixing hole 31 b of the main body 31 is engaged with the positioning protrusion 2b, as shown in FIG. 4B. Thus, a lower end face of the blower fan 30b is departed by a predetermined distance from the bottom of the housing 2. The blower fan 30b can suck the air in the inside of the housing 2 from upper side and lower side thereof as shown by arrows of solid lines. In addition, the screw holes formed on the posts 2a will be used to mount the optical engine 100, so that the blower fan 30b is not fixed on the housing 2, at this time.

After mounting the blower fan 30b on the housing 2 as described above, the optical engine 100 is disposed at a predetermined position above the blower fan 30b, and the optical engine 100 is fixed on the housing 2 with a plurality of screws. Two screws 38 among the screws use to fix the optical engine 100 on the housing 2 penetrate through the screw holes 32d of the upper cover member 32a and the fixing hole 31b of the main body 31, and are screwed with the screw holes formed on the posts 2a. Thus, the blower fan 30b is fixed on the housing 2 with the optical engine 100, simultaneously. In other words, the blower fan 30b is stationary held down between the housing 2 and the optical engine 100.

Under such a state, the partition 32f of the upper cover member 32 contacts a lower end face of the frame or the housing of the optical engine 100 in the vicinity of the through holes as described above, so that the cooling air exhausted from the opening 34 toward the color wheel 13 rarely blows back to the blower fan 30b through a gap between the lower end face of the frame or housing of the optical engine 100 and the upper end face of the blower fan 30b.

As described above, according to the configuration of the video projector 1, when the main body 31 of the blower fan 30b sucks the air, the air is mainly sucked into the main body 31 through the through holes from the portion of the optical engine 100 where the optical tunnel 15, the mirror 16 and the DMD 17 are disposed. Thus, the optical elements such as the optical tunnel 15, the mirror 16 and the DMD 17 are cooled by the air sucked into the blower fan 30b through the optical engine 100, without increasing the capacity of the ventilation fan 30a. Furthermore, the color wheel 13 is cooled by a part of the cooling air generated by the blower fan 30b and exhausted from the opening 34, so that the color wheel 13 which is heated higher by irradiation of the light emitted from the light source 11 can be cooled effectively by the cooling air generated by the blower fan 30 for cooling the light source 11 mainly. Consequently, the optical engine 100 of the video projector 1 can be cooled effectively by the blower fan 30b without providing any other fan or element in comparison with the configuration of the conventional video projector.

Furthermore, since the blower fan 30b is fixed on the housing 2 with the optical engine 100 simultaneously by the screws 38 so that the blower fan 30b is stationary held down between the housing 2 and the optical engine 100, there is no need to fix the blower fan 30b on the housing 2 with the screws independently from the optical engine 100. Consequently, the assembling work of the video projector 1 can be simplified, and the manufacturing cost of the video projector 1 can be reduced.

Moreover, the optical engine 100 is not limited to the configuration that forms the image with using the color wheel 13 and the DMD 17. It, however, may be configured such that the image is formed by passing the lights which are outputted from the light source through liquid crystal display panels, which are arranged corresponding to three primary colors, and synthesizing the lights passing through the liquid crystal display panels subsequently. In other words, in the present invention, it is sufficient that the portion where the temperature becomes higher by irradiation of the light emitted from the light source 11 is cooled by a part of the cooling air generated by the blower fan for cooling the light source mainly. Thereby, the portion can be cooled efficiently without increasing the capacity of another fan or adding another fan. Consequently, the video projector which can maintain the temperature of the light source in a proper level and cool the elements used to form an image properly can be provided without increasing the manufacturing cost.

## Claims

1. A video projector (1) comprising:
an optical engine (100) that forms an image by using image signals inputted from outside, and projects the image on a screen disposed in front of the optical engine;
a light source (11) that emits light and irradiates optical elements of the optical engine used to form the image;
a housing (2) on which the optical engine (100) and the light source (11) are mounted;
**characterized by**
a single blower fan (30b) provided on the housing (2) in a vicinity of the light source (11) and between the housing (2) and the optical engine (100), wherein
the single blower fan (30b) has a first air suction opening (31 c) on a first end face (31 a) facing the optical engine (100); and
the single blower fan (30b) sucks air by said first air suction opening (31 c) through at least a first portion of the optical engine (100), generates a cooling air flow through a duct (32) and exhausts a part of the cooling air flow through an opening (34) in the duct facing a second portion (13) of the optical engine (100) and the rest of the cooling air flow through an exhaust vent (33) in the duct (32) facing the light source (11), so that elements of the optical engine (100) and the light source (11) are cooled by the single blower fan (30b), simultaneously.

2. The video projector (1) in accordance with claim 1, **characterized in that**
the optical engine (100) includes a color wheel (13) which is irradiated by light emitted from the light source (11) and disposed in the second portion;
a frame or a housing of the optical engine (100) has a plurality of through holes on an end face thereof facing the single blower fan (30b); and
the single blower fan (30b) has a motor (31d) and a fan (31e) for generating the cooling air flow.

3. The video projector (1) in accordance with claim 1 or 2, **characterized in that** the single blower fan (30b) has a second air suction opening on a second end face facing the housing (2), wherein said second end face is departed by a predetermined distance from the housing (2).

4. The video projector (1) in accordance with one of claims 1 to 3, **characterized in that** the single blower fan (30b) has a partition (32f) which is formed to take along the first air suction opening (31 c) on the first end face (31 a) and protruded so as to contact an end face of the frame or the housing of the optical engine (100) in a vicinity of the through holes.

5. The vide projector (1) in accordance with one of claims 1 to 4, **characterized in that** the single blower fan (30b) is fixed on the housing (2) with the optical engine (100) simultaneously by screws (38) so that the single blower fan (30b) is stationary held down between the housing (2) and the optical engine (100).

## Patentansprüche

1. Video- Projektor (1), aufweisend:
eine optische Maschine (100), der ein Bild unter Verwendung von Bildsignalen, eingegeben von außen, bildet, und das Bild auf einen Bildschirm, angeordnet vor der optischen Maschine, projiziert;
eine Lichtquelle (11), die Licht emittiert und optische Elemente der optischen Maschine anstrahlt, verwendet um das Bild zu bilden;
ein Gehäuse (2), an dem die optische Maschine (100) und die Lichtquelle (11) montiert sind;
**gekennzeichnet durch**
einen einzigen Gebläselüfter (30), vorgesehen an dem Gehäuse (2) in einer Nähe der Lichtquelle (11) und zwischen dem Gehäuse (2) und der optischen Maschine (100), wobei
der einzige Gebläselüfter (30b) eine erste Luftansaugöffnung (31 c) an einer ersten Endfläche (31 a) hat, die der optischen Maschine (100) zugewandt ist; und
der einzige Gebläselüfter (30b) Luft **durch** die erste Luftansaugöffnung (31c)durch zumindest einen ersten Abschnitt der optischen Maschine (100) ansaugt, einen Kühlluftstrom **durch** einen Kanal (32) erzeugt und einen Teil des Kühlluftstromes durch eine Öffnung (34) in den Kanal, der einem zweiten Abschnitt (13) der optischen Maschine (100) zugewandt ist, abgibt, und den Rest des Kühlluftstromes durch eine Ausblasöffnung (33) in den Kanal (32), der der Lichtquelle (11) zugewandt ist, ausbläst, so dass die Bauteile der optischen Maschine (100) und die Lichtquelle (11) **durch** den einzigen Gebläselüfter (30b) gleichzeitig gekühlt werden.

2. Video- Projektor (1) nach Anspruch 1, **dadurch gekennzeichnet, dass** die optische Maschine (100) ein Farbrad (13) enthält, das durch Licht, emittiert von der Lichtquelle (11) und angeordnet in dem zweiten Abschnitt, angestrahlt wird;
ein Rahmen oder ein Gehäuse der optischen Maschine (100) eine Mehrzahl von Durchgangsöffnungen auf einer Endfläche derselben hat, die dem einzigen Gebläselüfter (30b) zugewandt ist; und
der einzige Gebläselüfter (30b) einen Motor (31 d) und ein Lüfterrad (31 e) zum Erzeugen des Kühlluftstromes hat.

3. Video- Projektor (1) nach Anspruch 1 oder 2, **dadurch gekennzeichnet, dass** der einzige Gebläselüfter (30b) eine zweite Luftansaugöffnung auf einer zweiten Endfläche hat, die dem Gehäuse (2) zugewandt ist, wobei die zweite Endfläche um einen vorbestimmten Abstand von dem Gehäuse (2) entfernt ist.

4. Video- Projektor (1) nach einem der Ansprüche 1 bis 3, **dadurch gekennzeichnet, dass** der einzige Gebläselüfter (30b) eine Trennwand (32f) hat, die gebildet ist, um die erste Luftansaugöffnung (31 c) auf der ersten Endfläche (31 a) aufzuweisen und vorspringt, um eine Endfläche des Rahmens oder des Gehäuses der optischen Maschine (100) in der Nähe der Durchgangsöffnungen zu berühren.

5. Video- Projektor (1) nach einem der Ansprüche 1 bis 4, **dadurch gekennzeichnet, dass** der einzige Gebläselüfter (30b) an dem Gehäuse (2) gleichzeitig mit der optischen Maschine (100) durch Schrauben (38) befestigt wird, so dass der einzige Gebläselüfter (30b) zwischen dem Gehäuse (2) und der optischen Maschine (100) stationär unten gehalten wird.

## Revendications

1. Projecteur vidéo (1) comprenant :
une optique (100) formant une image au moyen de signaux d'image entrés depuis l'extérieur et projetant l'image sur un écran disposé en face du moteur optique ;
une source lumineuse (11) émettant de la lumière et irradiant des éléments optiques de l'optique utilisée pour former l'image ;
un logement (2) sur lequel sont montés l'optique (100) et la source lumineuse (11) ;
**caractérisé par**
un ventilateur soufflant simple (30b) prévu sur le logement (2) à proximité de la source de lumière (11) et entre le logement (2) et l'optique (100), dans lequel
le ventilateur soufflant simple (30b) présente une première ouverture d'aspiration d'air (31c) sur une première face d'extrémité (31a) faisant face à l'optique (100) ; et
le ventilateur soufflant simple (30b) aspire l'air par ladite première ouverture d'aspiration d'air (31c) à travers au moins une première partie de l'optique (100), génère un écoulement d'air de refroidissement à travers un conduit (32) et évacue une partie de l'écoulement d'air de refroidissement à travers une ouverture (34) dans le conduit faisant face à une seconde partie (13) de l'optique (100) et le reste de l'écoulement d'air de refroidissement à travers un évent d'évacuation (33) dans le conduit (32) faisant face à la source lumineuse (11), de telle sorte que les éléments de l'optique (100) et la source lumineuse (11) soient refroidis simultanément par le ventilateur soufflant simple (30b).

2. Projecteur vidéo (1) selon la revendication 1,
**caractérisé en ce que**
l'optique (100) comprend une roue de couleur (13) qui est irradiée par la lumière émise depuis la source lumineuse (11) et disposée dans la seconde partie ;
un cadre ou un logement de l'optique (100) possède plusieurs orifices traversants sur une face d'extrémité de celui-ci faisant face au ventilateur soufflant simple (30b) ; et
le ventilateur soufflant simple (30b) possède un moteur (31d) et un ventilateur (31e) pour générer l'écoulement d'air de refroidissement.

3. Projecteur vidéo (1) selon la revendication 1 ou 2, **caractérisé en ce que** le ventilateur soufflant simple (30b) possède une seconde ouverture d'aspiration d'air sur une seconde face d'extrémité faisant face au logement (2), dans lequel ladite seconde face d'extrémité est éloignée d'une distance prédéterminée du logement (2).

4. Projecteur vidéo (1) selon l'une des revendications 1 à 3, **caractérisé en ce que** le ventilateur soufflant simple (30b) possède une cloison (32f) qui est formée de sorte à suivre la première ouverture d'aspiration d'air (31c) sur la première face d'extrémité (31a) et à faire saillie de manière à être en contact avec une face d'extrémité du cadre ou du logement de l'optique (100) au voisinage des orifices traversants.

5. Projecteur vidéo (1) selon l'une des revendications 1 à 4, **caractérisé en ce que** le ventilateur soufflant simple (30b) est fixé sur le logement (2) avec l'optique (100) simultanément par des vis (38) de telle sorte que le ventilateur soufflant simple (30b) est maintenu immobile entre le logement (2) et l'optique (100).
